# EUROPÄISCHE PATENTSCHRIFT

(11) **EP 3 222 119 B1**
(45) Veröffentlichungstag und Bekanntmachung des Hinweises auf die Patenterteilung: **03.06.2020**
(21) Anmeldenummer: 15813235.7
(22) Anmeldetag: 13.11.2015
(51) Int. Cl.: H05B 45/14, H05B 45/39

(54) **BETRIEBSSCHALTUNG ZUR VERSORGUNG EINES LEUCHTMITTELS, LED-KONVERTER, SYSTEM UND VERFAHREN ZUM BETREIBEN EINER BETRIEBSSCHALTUNG**
OPERATING CIRCUIT FOR ENERGIZING A LIGHT-EMITTING ELEMENT, LED CONVERTER, SYSTEM AND METHOD FOR OPERATING AN OPERATING CIRCUIT
CIRCUIT DE FONCTIONNEMENT POUR ALIMENTER UN MOYEN D'ÉCLAIRAGE, CONVERTISSEUR À DEL ET PROCÉDÉ POUR FAIRE FONCTIONNER UN CIRCUIT DE FONCTIONNEMENT

(30) Priorität: 17.11.2014 DE 102014223377; 11.05.2015 AT 1152015 U
(43) Veröffentlichungstag der Anmeldung: 27.09.2017
(73) Patentinhaber: Tridonic GmbH & Co. KG, 6851 Dornbirn (AT)
(72) Erfinder: NESENSOHN, Christian, 6840 Götzis (AT)
(74) Vertreter: Banzer, Hans-Jörg
(86) Internationale Anmeldenummer: PCT/AT2015/050292
(87) Internationale Veröffentlichungsnummer: WO 2016/077855

(56) Entgegenhaltungen:
- WO-A2-2014/176617
- DE-A1-102010 050 836
- DE-A1-102012 008 499

## Beschreibung

Die Erfindung betrifft eine Betriebsschaltung zur Versorgung eines Leuchtmittels, einen LED-Konverter, ein System mit einem Leuchtmittel und ein Verfahren zum Betreiben einer derartigen Betriebsschaltung. Die Erfindung betrifft insbesondere derartige Vorrichtungen und Verfahren, bei denen ein Leuchtmittel, insbesondere ein Leuchtmittel, das ein oder mehrere Leuchtdioden umfasst, mit einer Betriebsschaltung, die eine Potentialtrennung aufweist, mit Energie versorgt wird.

Eine Betriebsschaltungen für ein Leuchtmittel kann einen Wandler umfassen, der zur Übertragung von elektrischer Energie von einer Eingangsseite zu einer Ausgangsseite dient. Derartige Wandler werden in verschiedenen Anwendungen zur Strom- oder Spannungsversorgung, wie beispielsweise in getakteten Schaltnetzteilen, eingesetzt. Bei getakteten Wandlern werden steuerbare Schalter verwendet und getaktet betrieben, um elektrische Energie auf die Ausgangsseite zu übertragen.

Manche Betriebsschaltungen für ein Leuchtmittel sind so ausgestaltet, dass sie als Konstantstromquelle arbeiten. Andere Betriebsschaltungen für ein Leuchtmittel sind so ausgestaltet, dass sie als Konstantspannungsquelle arbeitet. Abhängig von dem jeweils verwendeten Leuchtmittel kann entweder eine Betriebsschaltung oder ein LED-Konverter, der als Konstantstromquelle arbeitet, oder eine Betriebsschaltung oder ein LED-Konverter, der als Konstantspannungsquelle arbeitet, verwendet werden. Die Vorhaltung derartiger unterschiedlicher Typen von Betriebsschaltungen kann zu erhöhtem Aufwand und erhöhten Kosten führen.

Die Druckschrift DE 10 2012 008499 A1 offenbart eine Betriebsschaltung zur Versorgung eines Leuchtmittels und ein Verfahren zum Betreiben derselben nach dem Oberbegriff der unabhängigen Ansprüche. Die Betriebssschaltung ist zur Verwendung für unterschiedliche Leuchtmittel konfigurierbar, wobei eine Konfiguration durch einen Widerstand auf einer Sekundärseite der Betriebssschaltung wählbar ist.

Die Druckschrift DE 10 2010 050836 A1 offenbart eine Betriebsschaltung zur Versorgung eines Leuchtmittels, insbesondere von Leuchtdioden, mit einem LLC-Resonanzwandler und einer Schaltersteuereinrichtung, wobei die Betriebsschaltung einen ersten Betriebsmodus für eine Stromregelung und einen zweiten Betriebsmodus für eine Spannungsregelung aufweist.

Ein Übergang vom ersten zum zweiten Betriebsmodus erfolgt bei einem plötzlichen Anstieg einer Ausgangsspannung der Betriebsschaltung.

Es besteht ein Bedarf an Vorrichtungen und Verfahren, die eine vielfältige Einsatzmöglichkeit von Betriebsschaltungen für ein Leuchtmittel erlaubt. Es besteht ein Bedarf an derartigen Vorrichtungen und Verfahren, die zur Verwendung mit Leuchtmitteln, die eine oder mehrere Leuchtdioden umfassen, geeignet sind.

Nach Ausführungsbeispielen werden eine Betriebsschaltung, ein LED-Konverter, ein System und ein Verfahren mit den in den unabhängigen Ansprüchen angegebenen Merkmalen angegeben. Die abhängigen Ansprüche definieren Ausführungsformen.

Die Betriebsschaltung nach Ausführungsbeispielen kann wahlweise sowohl als Stromquelle als auch als Spannungsquelle eingesetzt werden. Die Betriebsschaltung kann so ausgestaltet sein, dass keine elektrisch leitenden Verbindungen geändert werden müssen, um die Betriebsschaltung zwischen dem ersten Betriebsmodus und dem zweiten Betriebsmodus umzukonfigurieren.

Die Betriebsschaltung nach Ausführungsbeispielen und die Verfahren, mit denen diese betrieben wird, nutzen aus, dass durch Änderung der Regelung, mit der Steuersignale für einen LLC-Resonanzwandler erzeugt werden, der LLC-Resonanzwandler gut sowohl als Stromquelle als auch als Spannungsquelle betrieben werden kann. Durch die Auswählbarkeit der Betriebsmodi ist es nicht mehr erforderlich, unterschiedliche Betriebsgeräte zu verwenden, die entweder nur als Spannungsquelle oder nur als Stromquelle einsetzbar sind.

Die Schaltersteuereinrichtung kann eingerichtet sein, um in dem zweiten Betriebsmodus die Signale zum Ansteuern des ersten Schalters und des zweiten Schalters abhängig von der Busspannung zu erzeugen. Die Schaltersteuereinrichtung kann eingerichtet sein, um in dem ersten Betriebsmodus die Signale zum Ansteuern des ersten Schalters und des zweiten Schalters unabhängig von der Busspannung zu erzeugen. Dadurch kann der Verstärkungsfaktor bei einer Spannungsregelung abhängig von der Busspannung eingestellt werden, während die Stromregelung weiterhin in besonders einfacher Weise implementiert werden kann.
Die Schaltersteuereinrichtung kann eine weitere integrierte Halbleiterschaltung umfassen, die mit der integrierten Halbleiterschaltung gekoppelt ist, um ein Potenzial an wenigstens einem Anschluss der integrierten Halbleiterschaltung selektiv dann zu verändern, wenn die Spannungsregelung erfolgen soll. Dadurch kann die weitere integrierte Halbleiterschaltung, die beispielsweise ein Mikroprozessor oder Prozessor sein kann, selektiv die Arbeitsweise der integrierten Halbleiterschaltung beeinflussen, wenn die Spannungsregelung erfolgen soll.

Die Erfindung wird nachfolgend unter Bezugnahme auf die beigefügte Zeichnung anhand bevorzugter Ausführungsbeispiele näher erläutert.
FIG. 1 zeigt eine schematische Darstellung eines Beleuchtungssystems mit einem LED-Konverter nach einem nicht zur Erfindung gehörenden Beispiel.
FIG. 2 zeigt ein Schaltbild einer Betriebsschaltung nach einem nicht zur Erfindung gehörenden Beispiel.
FIG. 3 zeigt eine schematische Darstellung eines Beleuchtungssystems mit einem LED-Konverter nach einem nicht zur Erfindung gehörenden Beispiel.
FIG. 4 zeigt eine schematische Darstellung eines Beleuchtungssystems mit einem LED-Konverter nach einem nicht zur Erfindung gehörenden Beispiel.
FIG. 5 zeigt eine schematische Darstellung eines Beleuchtungssystems mit einem LED-Konverter nach einem nicht zur Erfindung gehörenden Beispiel.
FIG. 6 zeigt eine schematische Darstellung eines Beleuchtungssystems mit einem LED-Konverter nach einem Ausführungsbeispiel.
FIG. 7 ist ein Flussdiagramm eines Verfahrens nach einem Ausführungsbeispiel.
FIG. 8 veranschaulicht eine Funktionsweise einer Betriebsschaltung nach einem Ausführungsbeispiel.
FIG. 9 zeigt eine beispielhafte Implementierung einer Schaltersteuereinrichtung einer Betriebsschaltung nach einem Ausführungsbeispiel.
FIG. 10 zeigt ein Schaltbild einer Betriebsschaltung nach einem Ausführungsbeispiel.

Die Erfindung wird nachfolgend anhand von Ausführungsbeispielen unter Bezugnahme auf die Figuren näher beschrieben, in denen identische Bezugszeichen identische oder korrespondierende Elemente repräsentieren. Die Merkmale verschiedener Ausführungsbeispiele können miteinander kombiniert werden, sofern dies in der Beschreibung nicht ausdrücklich ausgeschlossen wird. Auch wenn einige Ausführungsbeispiele im Kontext spezifischer Anwendungen, beispielsweise im Kontext von Betriebsgeräten für LED-Module, näher beschrieben werden, sind die Ausführungsbeispiele nicht auf diese Anwendungen beschränkt.

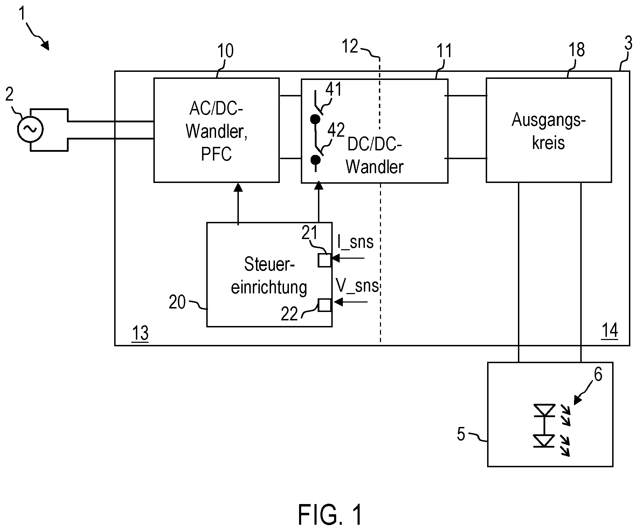

FIG. 1 zeigt ein System 1, bei dem ein LED-Konverter 3 mit einer Betriebsschaltung nach einem nicht zur Erfindung gehörenden Beispiel ein Leuchtmittel 5 mit Energie versorgt. Das Leuchtmittel 5 kann eine Leuchtdiode (LED) oder mehrere LEDs umfassen. Die LEDs 6 können anorganische oder organische LEDs sein.

Der LED-Konverter 3 ist im Betrieb eingangsseitig mit einer Versorgungsspannungsquelle 2, beispielsweise einer Netzspannung, gekoppelt. Der LED-Konverter 3 kann einen Gleichrichter 10 umfassen. Der LED-Konverter 3 kann optional eine Leistungsfaktorkorrekturschalung (PFC, "Power Factor Correction") 10 umfassen. Der LED-Konverter 3 umfasst einen Wandler 11. Der Wandler 11 kann ein DC/DC-Wandler sein. Der Wandler 11 ist als LLC-Resonanzwandler ausgestaltet, wie nachfolgend noch ausführlicher beschrieben wird.

Der Wandler 11 ist als getakteter Wandler ausgestaltet und weist einen ersten steuerbaren Schalter 41 und einen zweiten steuerbaren Schalter 42 auf. Der erste steuerbare Schalter 41 und/oder der zweite steuerbare Schalter 42 kann ein Leistungsschalter sein. Der erste steuerbare Schalter 41 und/oder der zweite steuerbare Schalter 42 kann ein Transistor mit isolierter Gateelektrode sein. Der erste steuerbare Schalter 41 und/oder der zweite steuerbare Schalter 42 kann ein MOSFET sein.

Wie noch ausführlich beschrieben wird, ist der Wandler 14 ein primärseitig getakteter Wandler, bei dem eine Steuereinrichtung 20 den ersten steuerbaren Schalter 41 und den zweiten steuerbaren Schalter 42 getaktet schaltet.

Der Wandler 11 kann eine galvanische Trennung aufweisen. Eine Primärseite des Wandlers 11 und eine Sekundärseite des Wandlers 11 können galvanisch getrennt sein. Dadurch kann eine Potentialtrennung zwischen unterschiedlichen Bereichen 13, 14 des LED-Konverters erzeugt werden. Die Ausgangsseite 14 mit der Sekundärseite des Wandlers kann als SELV ("Separated Extra Low Voltage")-Bereich ausgestaltet sein und kann durch eine SELV-Barriere 12 von der Eingangsseite 13 getrennt sein. Die Potentialbarriere 12 muss nicht notwendig eine SELV-Barriere sein, sondern kann auch eine andere Potentialbarriere sein.

Der LED-Konverter 3 kann optional einen Ausgangskreis 18 aufweisen, der mit einer Sekundärspule des Wandlers 11 gekoppelt ist. Der Ausgangskreis 18 kann auch in das Leuchtmittel 5 integriert sein.

Wie noch ausführlicher beschrieben wird, ist die Betriebsschaltung so eingerichtet, dass sie eine Spannungsregelung der Ausgangsspannung oder eine Stromregelung des Ausgangsstroms vornehmen kann. Der LED-Konverter 3 kann entsprechend sowohl dann verwendet werden, wenn das Leuchtmittel 5 im zeitlichen Mittel mit einem bestimmten Strom versorgt werden muss, als auch dann, wenn das Leuchtmittel 5 eine Spannungsversorgung mit einer Betriebsspannung benötigt.

Es kann derselbe Wandler 11 verwendet werden, um Energie über die Potenzialbarriere 12 zu übertragen, unabhängig davon, ob die Betriebsschaltung eine Stromregelung oder eine Spannungsregelung ausführt. Die Steuereinrichtung 20 kann die steuerbaren Schalter 41, 42 des Wandlers 11 unterschiedlich ansteuern, je nachdem, ob eine Stromregelung oder eine Spannungsregelung ausgeführt wird. Die Steuereinrichtung 20 kann einen Eingang 21 zum Empfangen eines Signals I_sns aufweisen, das einen Ausgangsstrom der Betriebsschaltung, beispielsweise am Ausgang des LED-Konverters 3, repräsentiert. Die Steuereinrichtung 20 kann einen weiteren Eingang 22 zum Empfangen eines Signals V_sns aufweisen, das eine Ausgangsspannung der Betriebsschaltung, beispielsweise am Ausgang des LED-Konverters 3, repräsentiert.

Wenn eine Auswahl eines ersten Betriebsmodus erfolgt, in dem die Betriebsschaltung eine Stromregelung vornimmt, kann die Steuereinrichtung 20 abhängig von einem Vergleich des erfassten Ausgangsstroms mit einem Stromsollwert Steuersignale zum Ansteuern der Schalter 41,42 erzeugen. Es kann eine Frequenz und/oder Schwellenwerte für eine Schalterbetätigung abhängig von dem Vergleich der erfassten Ausgangsspannung mit dem Stromsollwert eingestellt werden.

Wenn eine Auswahl eines zweiten Betriebsmodus erfolgt, in dem die Betriebsschaltung eine Spannungsregelung vornimmt, kann die Steuereinrichtung 20 abhängig von einem Vergleich der erfassten Ausgangsspannung mit einem Spannungssollwert Steuersignale zum Ansteuern der Schalter 41, 42 erzeugen. Es kann eine Frequenz und/oder Schwellenwerte für eine Schalterbetätigung abhängig von dem Vergleich der erfassten Ausgangsspannung mit dem Spannungssollwert eingestellt werden.

Eine Auswahl des ersten Betriebsmodus oder des zweiten Betriebsmodus kann erfolgen, bevor der LED-Konverter 3 installiert wird oder wenn der LED-Konverter 3 installiert wird. Die Auswahl kann auch im installierten Zustand des LED-Konverters 3 erfolgen. Die Auswahl des ersten Betriebsmodus oder des zweiten Betriebsmodus kann auf unterschiedliche Weisen erfolgen, wie nachfolgend noch ausführlicher beschrieben wird.

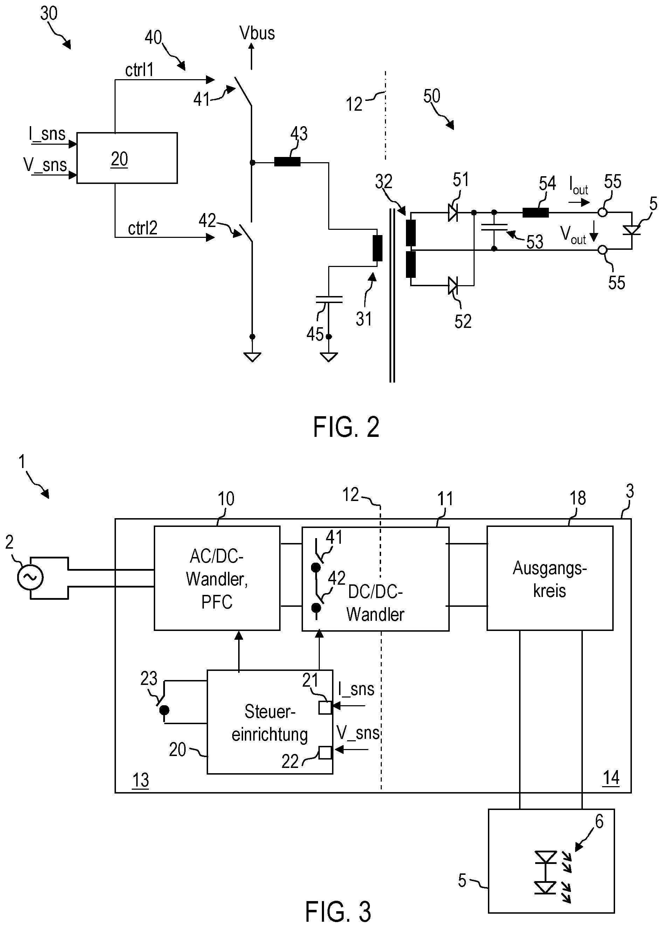

FIG. 2 ist ein Schaltbild einer Betriebsschaltung 30 nach einem nicht zur Erfindung gehörenden Beispiel. Die Betriebsschaltung 30 umfasst einen Wandler mit einer primärseitigen Schaltung 40 und einer sekundärseitigen Schaltung 50. Es liegt Potentialtrennung zwischen der primärseitigen Schaltung 40 und der sekundärseitigen Schaltung 50 vor. Zur Trennung kann ein Transformator mit einer Primärspule 31 und einer Sekundärspule 32 vorgesehen sein.

Der Wandler ist als LLC-Resonanzwandler ausgestaltet. Die Hauptinduktivität des Transformators kann als eine der Induktivitäten des LLC-Resonanzkreises wirken. Ein separates induktives Element 43 oder eine Streuinduktivität des Transformators kann als weitere Induktivität des LLC-Resonanzkreises wirken. Ein kapazitives Element oder eine Streukapazität kann eine Kapazität 45 des LLC-Resonanzkreises bilden.

Gemäß der allgemeinen Terminologie in diesem technischen Gebiet wird hier der Begriff "LLC-Resonanzkreis" oder "LLC-Resonanzwandler" so verwendet, dass damit ein Resonanzkreis mit zwei Induktivitäten und einer Kapazität oder ein entsprechender Wandler bezeichnet wird, wobei es nicht darauf ankommt, ob wie in FIG. 2 dargestellt eine der Induktivitäten zwischen die Kapazität 45 und die Induktivität 43 geschaltet ist oder ob der Kondensator zwischen die beiden Induktivitäten geschaltet ist. Ebenso kann die Induktivität 43 in die Primärspule 31 des Transformators als Streuinduktivität integriert sein.

Die primärseitige Schaltung 40 umfasst eine Halbbrückenschaltung mit einem ersten Schalter 41, der ein Leistungsschalter sein kann, und einem zweiten Schalter 42, der ein Leistungsschalter sein kann. Der erste Schalter 41 und der zweite Schalter 42 können identisch sein, und die Halbbrückenschaltung kann als symmetrische Halbbrückenschaltung ausgebildet sein.

Der Resonanzkreis kann mit einem Knoten zwischen dem ersten Schalter 41 und dem zweiten Schalter 42 verbunden sein. Der Resonanzkreis ist mit der Mitte der Halbbrückenschaltung zwischen den zwei Schaltern 41 und 42 verbunden. Ein erster Anschluss der ersten Induktivität 43 des LLC-Resonanzkreises kann mit dem Knoten zwischen dem ersten Schalter 41 und dem zweiten Schalter 42 der Halbbrückenschaltung verbunden sein. Ein zweiter Anschluss der ersten Induktivität 43 kann mit einem ersten Anschluss einer weiteren Induktivität des LLC-Resonanzkreises verbunden sein. Ein zweiter Anschluss der weiteren Induktivität kann mit der Kapazität 45 des Resonanzkreises verbunden sein.

Im Betrieb des Wandlers 30 steuert die Steuereinrichtung 20 den ersten Schalter 41 und den zweiten Schalter 42. Dabei kann jeder der Schalter jeweils mit derselben vorgegebenen Frequenz ein- und ausgeschaltet werden. Die Steuereinrichtung 20 kann den ersten Schalter 41 und den zweiten Schalter 42 so steuern, dass immer maximal einer der beiden Schalter leitend geschaltet ist. Der erste Schalter 41 und der zweite Schalter 42 können von der Steuereinrichtung 20 wechselseitig getaktet betrieben werden. Eine Totzeit zwischen dem Ausschalten eines Schalters und dem Einschalten des jeweils anderen Schalters kann klein sein, insbesondere viel kleiner als das Inverse der Schaltfrequenz.

Die sekundärseitige Schaltung 50 weist einen mit der Sekundärspule 32 verbundenen Gleichrichter auf, der beispielsweise durch eine erste Diode 51 und eine zweite Diode 52 gebildet sein kann. Ein Ausgangskondensator 53 kann vorgesehen sein. Der Ausgangskondensator 53 kann direkt oder über eine optional vorhandene Induktivität 54 mit einem Ausgang 55 der Betriebsschaltung gekoppelt sein.

Eine mit dem Ausgang 55 der Betriebsschaltung verbundene Last 5 kann eine LED, eine LED-Strecke, mehrere LEDs oder mehrere LED-Strecken umfassen. Die LEDs können LEDs eines LED-Moduls sein.

Die sekundärseitige Schaltung 50 kann ein SELV-Bereich 14 sein, der durch eine SELV-Barriere 12 vom primärseitigen Bereich 13 getrennt ist. Die primärseitige Schaltung 40 kann alle Komponenten beinhalten, die nicht zum SELV-Bereich gehören.

Die Steuereinrichtung 20, die Steuersignale für den ersten Schalter 41 und den zweiten Schalter 42 erzeugt, kann gemäß einem ersten Betriebsmodus arbeiten. Im ersten Betriebsmodus erfolgt eine Stromregelung, um einen Ausgangsstrom Iₒᵤₜ im zeitlichen Mittel auf einen Stromsollwert einzustellen. Im zweiten Betriebsmodus erfolgt eine Spannungsregelung, um eine Ausgangsspannung Vₒᵤₜ im zeitlichen Mittel auf einen Spannungssollwert einzustellen.

Im ersten Betriebsmodus kann eine vom Ausgangsstrom Iₒᵤₜ abhängende Messgröße I_sns von der Steuereinrichtung 20 als Regelgröße verwendet werden. Die Messgröße I_sns kann der Ausgangsstrom selbst sein, kann aber auch eine andere zum Ausgangsstrom proportionale oder anderweitig vom Ausgangsstrom abhängende Messgröße sein.

Im ersten Betriebsmodus kann eine von der Ausgangsspannung Vₒᵤₜ abhängende Messgröße V_sns von der Steuereinrichtung 20 als Regelgröße verwendet werden. Die Messgröße V_sns kann die Ausgangsspannung selbst sein, kann aber auch eine andere zur Ausgangsspannung proportionale oder anderweitig von der Ausgangsspannung abhängende Messgröße sein. Insbesondere kann die Messgröße V_sns beispielsweise durch eine Wicklung induktiv erfasst werden, die mit der Sekundärspule 32 des Transformators induktiv gekoppelt ist und die auf der Primärseite 40 angeordnet ist. Alternativ kann die Messgröße V_sns an der Sekundärseite 50 erfasst und über einen Optokoppler zur Primärseite 40 zurückgeführt werden.

Eine Auswahl, ob die Betriebsschaltung eine Stromregelung oder eine Spannungsregelung ausführen soll, kann auf unterschiedliche Weise ausgeführt werden, wie unter Bezugnahme auf FIG. 3 bis FIG. 6 ausführlicher beschrieben wird. Die Auswahl, ob die Betriebsschaltung eine Stromregelung oder eine Spannungsregelung ausführen soll, kann benutzerdefiniert oder automatisch durch die Betriebsschaltung selbst erfolgen.

FIG. 3 zeigt ein System 1 mit einer Betriebsschaltung nach einem nicht zur Erfindung gehörenden Beispiel. Die Betriebsschaltung umfasst ein Auswahlelement 23, mit dem festlegbar ist, ob die Betriebsschaltung eine Stromregelung oder eine Spannungsregelung ausführen soll.

Das Auswahlelement 23 kann einen mechanisch betätigbaren Schalter, beispielsweise einen Dip-Schalter, umfassen. Abhängig von einer Schalterstellung kann die Steuereinrichtung 20 die Schalter 41, 42 so steuern, dass eine Stromregelung für eine erste Stellung des mechanisch betätigbaren Schalters vorgenommen wird und dass eine Spannungsregelung für eine zweite Stellung des mechanisch betätigbaren Schalters vorgenommen wird.

Das Auswahlelement 23 kann einen Jumper umfassen. Abhängig davon, ob der Jumper gesetzt ist, kann die Steuereinrichtung 20 die Schalter 41, 42 so steuern, dass eine Stromregelung oder eine Spannungsregelung erfolgt.

Andere Ausgestaltungen des Auswahlelements 23 können verwendet werden. Beispielsweise können einstellbare Widerstände oder andere Kodierelemente verwendet werden, die Information darüber kodieren, ob die Betriebsschaltung als Konstantspannungsquelle oder als Konstantstromquelle betrieben werden soll.

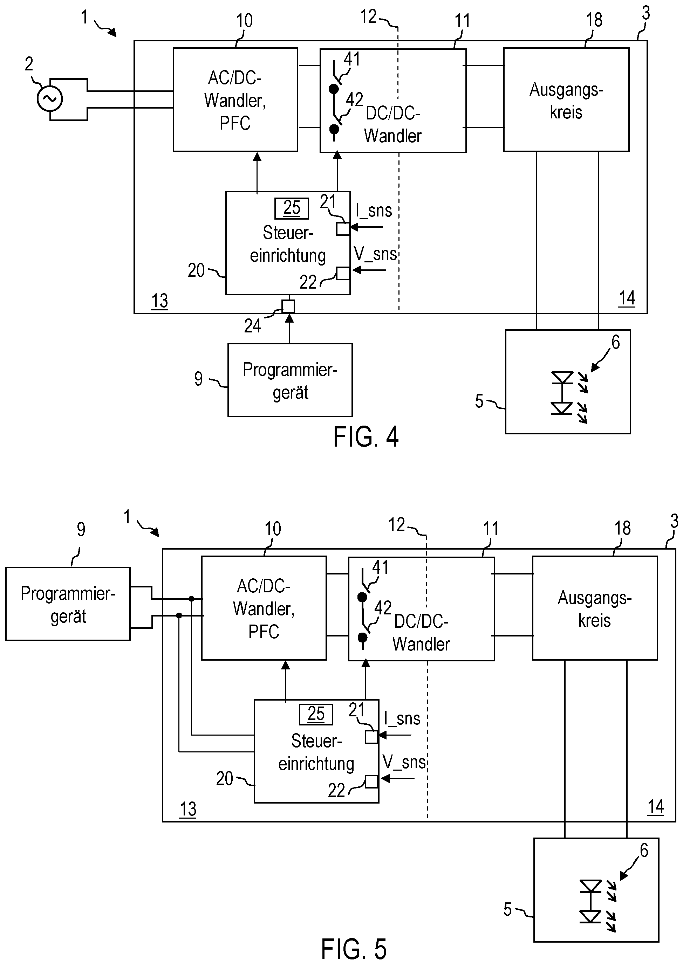

FIG. 4 zeigt ein System 1 mit einer Betriebsschaltung nach einem nicht zur Erfindung gehörenden Beispiel. Die Betriebsschaltung umfasst eine Kommunikationsschnittstelle 24. Die Kommunikationsschnittstelle 24 kann für eine Verbindung mit einem Bus, beispielsweise einem DALI-Bus, eingerichtet sein.

Über die Kommunikationsschnittstelle 24 kann eine Auswahl erfolgen, ob die Betriebsschaltung eine Stromregelung oder eine Spannungsregelung ausführen soll. Die Betriebsschaltung kann abhängig von einem Signal an der Kommunikationsschnittstelle 24 ermitteln, ob die als Stromquelle oder als Spannungsquelle arbeiten soll. Dazu kann beispielsweise vor einer Installation des LED-Konverters 3 ein Programmiergerät 9 lösbar mit der Kommunikationsschnittstelle 24 verbunden werden. Über das Programmiergerät 9 kann festgelegt werden, ob die Steuereinrichtung 20 die Schalter 41, 42 so betätigt, dass eine Stromregelung erfolgt, oder so betätigt, dass eine Spannungsregelung erfolgt.

Die Betriebsschaltung kann einen nicht-flüchtigen Speicher 25 umfassen, in dem gespeichert wird, ob der erste Betriebsmodus für eine Stromregelung oder der zweite Betriebsmodus für eine Spannungsregelung ausgewählt wurde. Der nicht-flüchtige Speicher 25 kann in die Steuereinrichtung 20 integriert sein.

Das Programmiergerät 9 kann von der Betriebsschaltung abgekoppelt werden, bevor die Betriebsschaltung mit dem Leuchtmittel 5 verbunden wird.

Die Betriebsschaltung kann alternativ oder zusätzlich auch eingerichtet sein, um über einen Bus, beispielsweise einen DALI-Bus, Information an der Kommunikationsschnittstelle 24 zu empfangen, die festlegt, ob eine Stromregelung oder eine Spannungsregelung erfolgen soll.

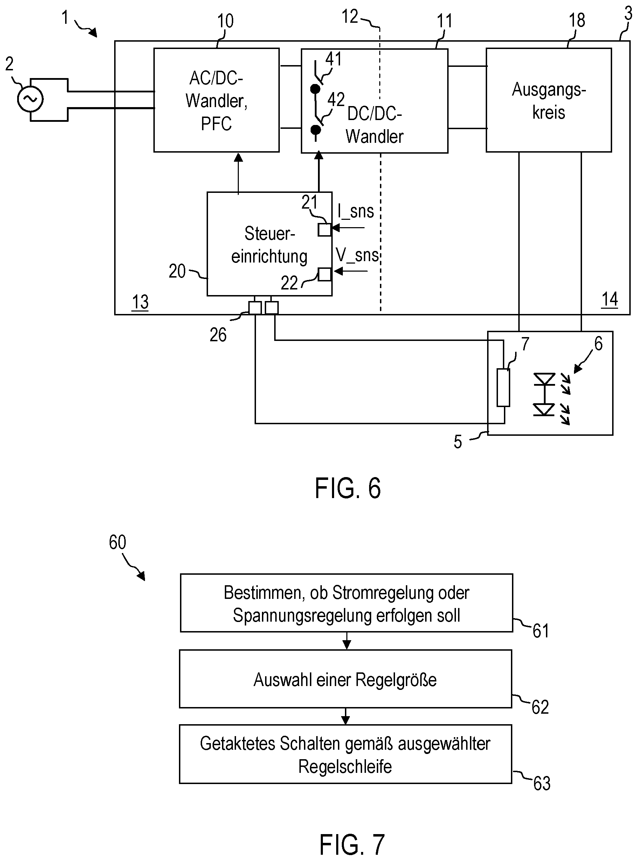

Eine Auswahl, ob die Betriebsschaltung im ersten Betriebsmodus für eine Stromregelung oder im zweiten Betriebsmodus für eine Spannungsregelung arbeiten soll, kann nicht nur über die Kommunikationsschnittstelle 24 erfolgen. Beispielsweise kann die Steuereinrichtung 20 auch mit einer anderen Schnittstelle des LED-Konverters 3 gekoppelt und eingerichtet sein, um zu erkennen, ob über die andere Schnittstelle ein Signal empfangen wird, mit dem festgelegt wird, ob die Betriebsschaltung im ersten Betriebsmodus für eine Stromregelung oder im zweiten Betriebsmodus für eine Spannungsregelung arbeiten soll. Diese andere Schnittstelle kann beispielsweise ein Versorgungseingang sein, wie in FIG. 5 dargestellt, oder eine zur Verbindung mit dem Leuchtmittel 5 eingerichtet Schnittstelle, wie in FIG. 6 dargestellt.

Die andere Schnittstelle, über die ausgewählt werden kann, ob die Betriebsschaltung im ersten Betriebsmodus für eine Stromregelung oder im zweiten Betriebsmodus für eine Spannungsregelung arbeiten soll, kann so ausgestaltet sein, dass sie im Nutzbetrieb der Betriebsschaltung mit einem Sensor, beispielsweise einem Temperatursensor oder einem Helligkeitssensor verbunden wird.

FIG. 5 zeigt ein System 1 mit einer Betriebsschaltung nach einem nicht zur Erfindung gehörenden Beispiel. Die Betriebsschaltung umfasst einen Versorgungseingang zur Verbindung mit der Versorgungsquelle 2.

Die Steuereinrichtung 20 kann mit dem Versorgungseingang verbunden sein, um zu erkennen, ob über den Versorgungseingang festgelegt wird, ob die Betriebsschaltung eine Stromregelung oder eine Spannungsregelung ausführen soll. Über den Versorgungseingang kann eine Auswahl erfolgen, ob die Betriebsschaltung eine Stromregelung oder eine Spannungsregelung ausführen soll. Die Betriebsschaltung kann abhängig von einem Signal an dem Versorgungseingang ermitteln, ob die als Stromquelle oder als Spannungsquelle arbeiten soll.

Dazu kann beispielsweise vor einer Installation des LED-Konverters 3 ein Programmiergerät 9 lösbar mit dem Versorgungseingang verbunden werden. Über das Programmiergerät 9 kann festgelegt werden, ob die Steuereinrichtung 20 die Schalter 41, 42 so betätigt, dass eine Stromregelung erfolgt, oder so betätigt, dass eine Spannungsregelung erfolgt.

Die Betriebsschaltung kann einen nicht-flüchtigen Speicher 25 umfassen, in dem abhängig von dem Signal am Versorgungseingang gespeichert wird, ob der erste Betriebsmodus für eine Stromregelung oder der zweite Betriebsmodus für eine Spannungsregelung ausgewählt wurde. Der nicht-flüchtige Speicher 25 kann in die Steuereinrichtung 20 integriert sein.

Das Programmiergerät 9 kann von der Betriebsschaltung abgekoppelt werden, bevor die Betriebsschaltung mit dem Leuchtmittel 5 und der Versorgungsquelle 2 verbunden wird.

FIG. 6 zeigt ein System 1 mit einer Betriebsschaltung nach einem Ausführungsbeispiel. Die Betriebsschaltung umfasst einen Anschluss 26 zur Verbindung mit dem Leuchtmittel 5. Die Betriebsschaltung kann eingerichtet sein, um automatisch Information von dem Leuchtmittel 5 auszulesen oder zu empfangen, die festlegt, ob die Steuereinrichtung 20 die Schalter 41, 42 für eine Stromregelung oder eine Spannungsregelung ansteuern soll. Das Leuchtmittel 5 kann ein Kodierelement 7 umfassen, das festlegt, ob das Leuchtmittel 5 für eine Versorgung durch eine Konstantstromquelle oder für eine Versorgung durch eine Spannungsquelle ausgelegt ist. Das Kodierelement 7 kann beispielsweise ein Widerstand oder ein anderes Element sein, das festlegt, ob die Betriebsschaltung zur Versorgung des Leuchtmittels 5 in dem ersten Betriebsmodus oder dem zweiten Betriebsmodus arbeiten soll.

Andere Techniken können verwendet werden, mit denen die Betriebsschaltung automatisch Information von dem Leuchtmittel 5 empfangen kann, die festlegt, welcher Betriebsmodus verwendet werden soll. Beispielsweise kann das Leuchtmittel 5 einen Mikrocontroller oder eine andere integrierte Halbleiterschaltung umfassen, der über eine Kommunikationsverbindung ein Signal an die Betriebsschaltung überträgt und so festlegt, ob die Betriebsschaltung im ersten Betriebsmodus oder im zweiten Betriebsmodus arbeiten soll.

FIG. 7 ist ein Flussdiagramm eines Verfahrens 60 nach einem Ausführungsbeispiel. Das Verfahren 60 kann mit einer Betriebsschaltung oder einem LED-Konverter nach einem Ausführungsbeispiel automatisch ausgeführt werden.

Bei 61 wird bestimmt, ob die Betriebsschaltung in einem ersten Betriebsmodus für eine Stromregelung oder in einem zweiten Betriebsmodus für eine Spannungsregelung arbeiten soll. Dazu kann ermittelt werden, in welchem von zwei Zuständen sich ein benutzerdefiniert betätigbares Auswahlelement 23 befindet. Alternativ oder zusätzlich kann ein Signal ausgewertet werden, das an einer Schnittstelle empfangen wird. Die Schnittstelle ist eine zur Kopplung mit dem Leuchtmittel 5 eingerichtete Schnittstelle 26.

Bei 62 wird abhängig davon, ob die Betriebsschaltung in dem ersten Betriebsmodus für eine Stromregelung oder in dem zweiten Betriebsmodus für eine Spannungsregelung arbeiten soll, festgelegt, welches Eingangssignal der Steuereinrichtung 20 für eine Regelung verwendet werden soll. In dem ersten Betriebsmodus kann eine Messgröße I_sns, die vom Ausgangsstrom abhängt, als Regelgröße verwendet werden, die mit einem Stromsollwert verglichen wird, um Steuersignale für die Schalter 41, 42 zu erzeugen. In dem ersten Betriebsmodus kann eine Messgröße V_sns, die von der Ausgangsspannung abhängt, als Regelgröße verwendet werden, die mit einem Spannungssollwert verglichen wird, um Steuersignale für die Schalter 41, 42 zu erzeugen.

Bei Schritt 63 werden die Schalter 41, 42 des LLC-Resonanzwandlers getaktet geschaltet. Dabei kann wenigstens eine Frequenz und/oder ein Schaltschwellenwert zum Schalten der Schalter 41, 42 davon abhängen, ob die Betriebsschaltung in dem ersten Betriebsmodus für eine Stromregelung oder in dem zweiten Betriebsmodus für eine Spannungsregelung arbeiten soll.

Die Steuereinrichtung 20 kann die Schalter 41, 42 abhängig davon, ob der erste Betriebsmodus für eine Stromregelung oder der zweite Betriebsmodus für eine Spannungsregelung ausgewählt ist, in unterschiedlicher Weise betätigen. Beispielsweise können Schaltfrequenzen aus unterschiedlichen Frequenzbereichen verwendet werden, um einerseits eine Stromregelung und andererseits eine Spannungsregelung auszuführen.

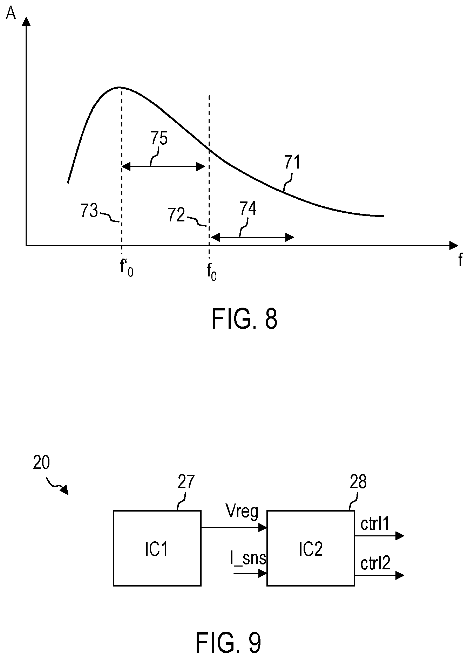

FIG. 8 ist eine schematische Darstellung eines Bode-Diagramms für einen LLC-Resonanzwandler einer Betriebsschaltung nach einem Ausführungsbeispiel, das eine Verstärkung als Funktion der Frequenz zeigt, mit der die Schalter 41, 42 getaktet geschaltet werden. Eine bei 72 dargestellte Frequenz f₀ kann der Resonanzfrequenz des LLC-Resonanzkreises entsprechen. Die Verstärkung kann bei einer bei 73 dargestellten Frequenz f'₀ ein Maximum aufweisen.

Wenn die Betriebsschaltung im ersten Betriebsmodus für eine Stromregelung arbeitet, können Frequenzen aus einem ersten Frequenzbereich 74 verwendet werden. Wenn die Betriebsschaltung im ersten Betriebsmodus für eine Stromregelung arbeitet, können Frequenzen aus einem zweiten Frequenzbereich 75 verwendet werden.
Der zweite Frequenzbereich 75 kann von dem ersten Frequenzbereich 74 verschieden sein. Beispielsweise kann der zweite Frequenzbereich 75 Frequenzen umfassen, die zwischen der Frequenz f'₀, bei der die Verstärkung ein Maximum aufweist, und der Resonanzfrequenz f₀ des LLC-Resonanzkreises liegen. Der zweite Frequenzbereich 75 kann derart sein, dass er nur Frequenzen umfasst, die kleiner oder gleich der Resonanzfrequenz f₀ des LLC-Resonanzkreises sind. Der erste Frequenzbereich 74 kann Frequenzen umfassen, die größer sind als die Resonanzfrequenz f₀ des LLC-Resonanzkreises. Der erste Frequenzbereich kann derart sein, dass er nur Frequenzen umfasst, die größer sind als die Resonanzfrequenz f₀ des LLC-Resonanzkreises.

Andere Ausgestaltungen sind möglich. Beispielsweise können auch für eine Spannungsregelung Schaltfrequenzen verwendet werden, die größer als die Resonanzfrequenz f₀ des LLC-Resonanzkreises sind.

Die Steuereinrichtung 20 kann so ausgestaltet sein, dass alternativ oder zusätzlich zur Schaltfrequenz andere Parameter des Regelkreises abhängig davon variieren, ob die Betriebsschaltung in dem ersten Betriebsmodus für eine Stromregelung oder in dem zweiten Betriebsmodus für eine Spannungsregelung arbeitet. Beispielsweise kann der Regler eine kürzere Antwortzeit aufweisen, d.h. schneller sein, wenn eine Stromregelung erfolgt als wenn eine Spannungsregelung erfolgt.

Die Steuereinrichtung 20 kann eingerichtet sein, um eine Busspannung, die dem LLC-Resonanzwandler 11 von der Leistungsfaktorkorrekturschaltung 13 zugeführt wird, bei der Spannungsregelung und/oder der Stromregelung zu berücksichtigen. Die Busspannung kann wenigstens in dem zweiten Betriebsmodus, in dem die Spannungsregelung erfolgt, in der Regelschleife berücksichtigt werden. Die Busspannung kann optional auch in dem ersten Betriebsmodus, in dem die Stromregelung erfolgt, in der Regelschleife berücksichtigt werden.

Die Steuereinrichtung 20 kann wenigstens eine integrierte Halbleiterschaltung umfassen. Die wenigstens eine integrierte Halbleiterschaltung kann als Mikrocontroller, Controller, Mikroprozessor, Prozessor, anwendungsspezifische Spezialschaltung (ASIC, "application specific integrarted circuit") oder Kombination davon ausgestaltet sein.

FIG. 9 veranschaulicht eine Implementierung einer Steuereinrichtung 20, die bei einer Betriebsschaltung nach einem Ausführungsbeispiel verwendet werden kann. Die Steuereinrichtung 20 umfasst eine integrierte Halbleiterschaltung 28. Die integrierte Halbleiterschaltung 28 kann eingerichtet sein, um Steuersignale ctrll, ctrl2 zum Ansteuern der Schalter 41, 42 des LLC-Resonanzwandlers zu erzeugen. Die integrierte Halbleiterschaltung 28 kann eingerichtet sein, um einen Regelkreis für eine Stromregelung auszuführen und um den LLC-Resonanzwandler abhängig von einer Messgröße I_sns, die vom Ausgangsstrom abhängt, getaktet zu schalten. Die integrierte Halbleiterschaltung 28 kann ein Controller sein.

Die Steuereinrichtung 20 kann eine weitere integrierte Halbleiterschaltung 27 umfassen. Die weitere integrierte Halbleiterschaltung 27 kann eingerichtet sein, um selektiv ein Signal Vreg an einen Eingang der integrierten Halbleiterschaltung 28 bereitzustellen, mit dem festgelegt wird, dass eine Spannungsregelung stattfinden soll.

Die weitere integrierte Halbleiterschaltung 27 kann das Signal Vreg abhängig von einer Programmierung der Betriebsschaltung oder abhängig von einem Zustand, in dem ein Auswahlelement 23 gesetzt ist, erzeugen. Die weitere integrierte Halbleiterschaltung 27 kann ein Prozessor sein.

Die Erfassung der Messgröße I_sns, die den Ausgangsstrom repräsentiert, und der Messgröße V_sns, die die Ausgangsspannung repräsentiert, kann bei Betriebsschaltungen und Verfahren nach Ausführungsbeispielen auf unterschiedliche Weise erfolgen. Die die Ausgangsspannung repräsentierten Messgröße V_sns kann unter Verwendung einer Wicklung erfasst werden, die auf einer Primärseite der Betriebsschaltung angeordnet ist und die induktiv mit einer Sekundärspule 32 des Transformators der Betriebsschaltung gekoppelt ist. Auf diese Weise kann eine Rückführung der Ausgangsspannung unter Verwendung eines Optokopplers vermieden werden.

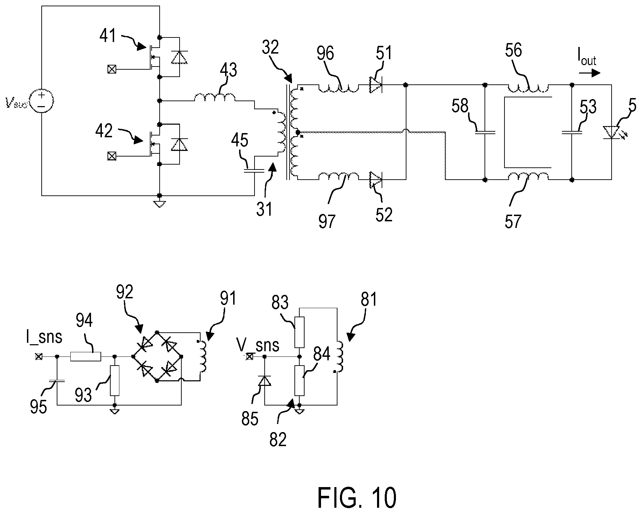

FIG. 10 zeigt eine Implementierung der Erfassung der Messgröße I_sns, die den Ausgangsstrom repräsentiert, und der Messgröße V_sns, die die Ausgangsspannung repräsentiert, bei Betriebsschaltungen und Verfahren nach Ausführungsbeispielen.

Zur Erfassung der Ausgangsspannung kann die Betriebsschaltung so ausgestaltet sein, dass eine Spannung V_sns erfasst werden kann, die an einer Wicklung oder andere Induktivität 81 induziert wird. Die Induktivität 81 ist induktiv mit der Sekundärspule 32 gekoppelt. Die Induktivität 81 kann von der Primärspule 31 verschieden sein, so dass die Spannungserfassung nicht unmittelbar an der Primärspule 31 erfolgt.

Die Ausgangsspannung am Ausgang 55 der Betriebsschaltung kann basierend auf der an der Wicklung 81 induzierten Spannung bestimmt werden. Wenn die Schalter 41, 42 der Halbbrückenschaltung geschaltet werden, wird Energie übertragen, bis der Kondensator 53 geladen ist. Die Last 5 klemmt die Spannung am Kondensator 53 auf einen Wert, der der Vorwärtsspannung der LEDs des Leuchtmittels entspricht. Die Spannung an der Sekundärspule entspricht der Ausgangsspannung der Schaltung minus der über den Gleichrichterdioden 51, 52 abfallenden Spannung.

Entsprechend können aus dem Maximalwert der Spannung, die beim Schalten der Schalter 41, 42 an der Sekundärspule 32 auftritt, Informationen über die Ausgangsspannung am Ausgang 55 abgeleitet werden. Dazu wird der Maximalwert der Spannung an der Induktivität 81 beispielsweise über einen Spannungsteiler 82 erfasst.

Der Spannungsteiler 82 kann ein hochohmiger Spannungsteiler sein. Der Spannungsteiler 82 kann ein Ohmscher Spannungsteiler mit wenigstens zwei Widerständen 83, 84 sein. Eine Diode 25 kann optional parallel zu einem Widerstand 84 des Spannungsteilers vorgesehen sein. Die Diode 85 kann dem Schutz eines nachfolgenden A/D-Wandlers und/oder einer nachfolgenden integrierten Halbleiterschaltung, beispielsweise der Steuereinrichtung 20, dienen, um negativen Spannungen in der zweiten Schaltphase auf eine Minimalspannung zu begrenzen. Im Falle von negativen Spannungen wird die Spannung auf die Durchflussspannung der Diode begrenzt.

Die Spannung V_sns am Widerstand 84 kann, optional nach A/D-Wandlung, der Steuereinrichtung 20 zugeführt werden.

Um die Ausgangsspannung der Betriebsschaltung zu bestimmen, kann die Vorwärtsspannung der Gleichrichterdioden 51, 52 berücksichtigt werden.

Bei weiteren Ausführungsbeispielen kann die Spannung an den Gleichrichterdioden 51,52 vernachlässigt werden.

Die Betriebsschaltung kann eingerichtet sein, um den Ausgangsstrom Iₒᵤₜ zu erfassen. Dazu kann ein Transformator für die Strommessung vorgesehen sein, der wenigstens eine Induktivität 96, 97 umfasst. Die wenigstens eine Induktivität 96, 97 kann zwischen die Sekundärspule 32 und die Gleichrichterdiode 51, 52 geschaltet sein. Es kann eine erste Induktivität 96 im Pfad zwischen der Sekundärspule 32 und der Gleichrichterdiode 51 vorhanden sein. Es kann eine zweite Induktivität 97 im Pfad zwischen der Sekundärspule 32 und der Gleichrichterdiode 52 vorhanden sein.

Die erste Induktivität 96 und die zweite Induktivität 97 können über die Potentialbarriere induktiv mit einer Induktivität 91 des Transformators für die Strommessung gekoppelt sein. Die Induktivität 91 kann auf der Primärseite der Betriebsschaltung vorgesehen sein. Die Induktivität 91 kann über einen Gleichrichter 92 und einen Widerstand 94 mit einem Kondensator 95 verbunden sein. Ein weiterer Widerstand 93 kann parallel zu dem Kondensator 95 geschaltet sein. Die Spannung am Kondensator 95 ist proportional zum Ausgangsstrom und stellt einen Messwert I_sns dar, der auf der Primärseite der Betriebsschaltung erfassbar ist und den Ausgangsstrom Iₒᵤₜ repräsentiert.

Der Messwert I_sns, der den Ausgangsstrom der Betriebsschaltung repräsentiert, kann in Kombination mit der an der Induktivität 81 erfassten Spannung V_sns verwendet werden, um die Ausgangsspannung der Betriebsschaltung zu bestimmen.

Die Betriebsschaltung kann optional eine Kapazität 58 und/oder wenigstens eine Induktivität 56, 57 an der Sekundärseite umfassen. Diese Komponenten können auch weggelassen werden.

Andere Ausgestaltungen können bei weiteren Ausführungsbeispielen verwendet werden. Beispielsweise kann die Ausgangsspannung auch sekundärseitig erfasst und über einen Optokoppler oder eine andere galvanische Trennung über die Potenzialbarriere 12 geführt werden.

Während Ausführungsbeispiele unter Bezugnahme auf die Figuren beschrieben wurden, können Abwandlungen bei weiteren Ausführungsbeispielen realisiert werden. Während die Betriebsschaltung so ausgestaltet sein kann, dass reversibel zwischen dem ersten Betriebsmodus und dem zweiten Betriebsmodus ausgewählt werden und die Auswahl anschließend wieder verändert werden kann, kann die Betriebsschaltung nach weiteren Ausführungsbeispielen auch so ausgelegt sein, dass eine Änderung der einmal getroffenen Auswahl des Betriebsmodus verhindert oder durch Sicherungsmaßnahmen erschwert wird.

Induktivitäten oder Kapazitäten können jeweils durch entsprechende induktive oder kapazitive Elemente, beispielsweise als Spulen oder Kondensatoren, gebildet werden. Es ist jedoch auch möglich, dass kleinere Induktivitäten, beispielsweise die kleinere Induktivität des LLC-Resonanzkreises, als Streuinduktivität ausgebildet sind. Ähnlich können kleinere Kapazitäten als Streukapazitäten ausgebildet sein.

Wandler und Verfahren nach Ausführungsbeispielen können insbesondere zur Versorgung eines Leuchtmittels, das LEDs umfasst, eingesetzt werden.

## Patentansprüche

1. Betriebsschaltung zur Versorgung eines Leuchtmittels (5), das wenigstens eine Leuchtdiode (6) umfasst, wobei die Betriebsschaltung umfasst:
einen LLC-Resonanzwandler (11) mit einer Halbbrückenschaltung, die einen ersten Schalter (41) und einen zweiten Schalter (42) aufweist, und
eine Schaltersteuereinrichtung (20) zum wechselseitig getakteten Schalten des ersten Schalters (41) und des zweiten Schalters (42),
wobei die Betriebsschaltung einen ersten Betriebsmodus für eine Stromregelung und einen zweiten Betriebsmodus für eine Spannungsregelung aufweist, und
wobei die Betriebsschaltung eine Schnittstelle (24; 26) umfasst, die mit der Schaltersteuereinrichtung (20) gekoppelt ist um eine Auswahl zwischen dem ersten Betriebsmodus und dem zweiten Betriebsmodus zu ermöglichen,
**dadurch gekennzeichnet, dass** die Schnittstelle (24; 26) als Anschluss zur Verbindung mit dem Leuchtmittel (5) eingerichtet ist.

2. Betriebsschaltung nach Anspruch 1,
wobei die Schaltersteuereinrichtung (20) eingerichtet ist, um in dem ersten Betriebsmodus Signale zum Ansteuern des ersten Schalters (41) und des zweiten Schalters (42) gemäß einer ersten Regelschleife zu erzeugen, und um in dem zweiten Betriebsmodus die Signale zum Ansteuern des ersten Schalters (41) und des zweiten Schalters (42) gemäß einer zweiten Regelschleife zu erzeugen, die von der ersten Regelschleife verschieden ist.

3. Betriebsschaltung nach Anspruch 2,
wobei der getaktete LLC-Resonanzwandler (11) eingerichtet ist, um eine Busspannung zu empfangen, und
wobei die Schaltersteuereinrichtung (20) eingerichtet ist, um in dem zweiten Betriebsmodus die Signale zum Ansteuern des ersten Schalters (41) und des zweiten Schalters (42) abhängig von der Busspannung zu erzeugen.

4. Betriebsschaltung nach einem der vorhergehenden Ansprüche,
wobei die Schaltersteuereinrichtung (20) eine integrierte Halbleiterschaltung (28) umfasst, die für die Stromregelung eingerichtet ist.

5. Betriebsschaltung nach Anspruch 4,
wobei die Schaltersteuereinrichtung (20) eine weitere integrierte Halbleiterschaltung (27) umfasst, die mit der integrierten Halbleiterschaltung (28) gekoppelt ist, um ein Potenzial an wenigstens einem Anschluss der integrierten Halbleiterschaltung (27) selektiv dann zu verändern, wenn die Spannungsregelung erfolgen soll.

6. LED-Konverter, umfassend
die Betriebsschaltung nach einem der vorhergehenden Ansprüche.

7. System, umfassend
den LED-Konverter (3) nach Anspruch 6 und
ein Leuchtmittel (5), das wenigstens eine Leuchtdiode (6) umfasst und mit einem Ausgang des LED-Konverters (3) verbunden ist.

8. System nach Anspruch 7,
wobei der LED-Konverter (3) eingerichtet ist, um abhängig von Information über das Leuchtmittel (5) zu bestimmen, ob die Stromregelung oder die Spannungsregelung erfolgt.

9. Verfahren zum Betreiben einer Betriebsschaltung zur Versorgung eines Leuchtmittels (5), das wenigstens eine Leuchtdiode (6) umfasst, wobei die Betriebsschaltung einen LLC-Resonanzwandler (11) mit einer Halbbrückenschaltung, die einen ersten Schalter (41) und einen zweiten Schalter (42) aufweist, umfasst,
wobei das Verfahren umfasst:
Ermitteln, ob die Betriebsschaltung als Konstantstromquelle oder als Konstantspannungsquelle betrieben werden soll, und
Ansteuern des ersten Schalters (41) und des zweiten Schalters (42) abhängig davon, ob die Betriebsschaltung als Konstantstromquelle oder als Konstantspannungsquelle betrieben werden soll,
wobei die Betriebsschaltung eine Schnittstelle (24; 26) umfasst, die mit der Schaltersteuereinrichtung (20) gekoppelt ist um die Auswahl zwischen dem ersten Betriebsmodus und dem zweiten Betriebsmodus zu ermöglichen,
**dadurch gekennzeichnet, dass** die Schnittstelle (24; 26) als Anschluss zur Verbindung mit dem Leuchtmittel (5) eingerichtet ist.

10. Verfahren nach Anspruch 9,
das mit der Betriebsschaltung nach einem der Ansprüche 1 bis 5 ausgeführt wird.

## Claims

1. Operating circuit for supplying a luminaire (5) which comprises at least one light-emitting diode (6), wherein the operating circuit comprises:
an LLC resonance converter (11) with a half-bridge circuit having a first switch (41) and a second switch (42), and
a switch control device (20) for alternatingly clocked switching of the first switch (41) and the second switch (42),
wherein the operating circuit has a first operating mode for current regulation and a second operating mode for voltage regulation, and
wherein the operating circuit comprises an interface (24; 26) which is coupled to the switch control device (20) in order to enable a selection between the first operating mode and the second operating mode,
**characterized in that** the interface (24; 26) is configured as a connection for connecting to the luminaire (5).

2. Operating circuit according to Claim 1,
wherein the switch control device (20) is configured to generate, in the first operating mode, signals for activating the first switch (41) and the second switch (42) according to a first control loop, and to generate, in the second operating mode, the signals for activating the first switch (41) and the second switch (42) according to a second control loop which is different from the first control loop.

3. Operating circuit according to Claim 2,
wherein the clocked LLC resonance converter (11) is configured to receive a bus voltage, and
wherein the switch control device (20) is configured to generate, in the second operating mode, the signals for activating the first switch (41) and the second switch (42) as a function of the bus voltage.

4. Operating circuit according to any one of the preceding claims,
wherein the switch control device (20) comprises an integrated semiconductor circuit (28) which is configured for current regulation.

5. Operating circuit according to Claim 4,
wherein the switch control device (20) comprises a further integrated semiconductor circuit (27) which is coupled to the integrated semiconductor circuit (28) in order to selectively change a potential at at least one terminal of the integrated semiconductor circuit (27) when voltage regulation is to take place.

6. LED converter, comprising
the operating circuit according to any one of the preceding claims.

7. System, comprising
the LED converter (3) according to Claim 6, and
a lighting means (5) which comprises at least one light-emitting diode (6) and is connected to an output of the LED converter (3).

8. System according to Claim 7,
wherein the LED converter (3) is configured to determine, as a function of information about the lighting means (5), whether the current regulation or the voltage regulation takes place.

9. Method for operating an operating circuit for supplying a luminaire (5) comprising at least one light-emitting diode (6), wherein the operating circuit comprises an LLC resonance converter (11) with a half-bridge circuit having a first switch (41) and a second switch (42),
wherein the method comprises:
ascertaining whether the operating circuit is to be operated as a constant current source or as a constant voltage source, and
activating the first switch (41) and the second switch (42) as a function of whether the operating circuit is to be operated as a constant current source or as a constant voltage source,
wherein the operating circuit comprises an interface (24; 26) which is coupled to the switch control device (20) in order to enable the selection between the first operating mode and the second operating mode,
**characterized in that** the interface (24; 26) is configured as a connection for connecting to the luminaire (5).

10. Method according to Claim 9,
which is executed with the operating circuit according to any one of Claims 1 to 5.

## Revendications

1. Circuit de fonctionnement pour l'alimentation d'une source d'éclairage (5) qui comprend au moins une diode électroluminescente (6), le circuit de fonctionnement comprenant :
un convertisseur à résonance LLC (11) comprenant un circuit en demi-pont, qui présente un premier commutateur (41) et un deuxième commutateur (42) et
un dispositif de commande de commutateurs (20) pour la commutation synchronisée alternée du premier commutateur (41) et du deuxième commutateur (42),
le circuit de fonctionnement présentant un premier mode de fonctionnement pour une régulation de courant et un deuxième mode de fonctionnement pour une régulation de tension et
le circuit de fonctionnement comprenant une interface (24 ; 26), qui est couplée au dispositif de commande de commutateurs (20) pour permettre une sélection entre le premier mode de fonctionnement et le deuxième mode de fonctionnement,
**caractérisé en ce que** l'interface (24 ; 26) est conçue comme un raccord pour la connexion à la source d'éclairage (5).

2. Circuit de fonctionnement selon la revendication 1,
dans lequel le dispositif de commande de commutateurs (20) est conçu pour, dans le premier mode de fonctionnement, générer des signaux pour la commande du premier commutateur (41) et du deuxième commutateur (42) selon une premier boucle de régulation et pour, dans le deuxième mode de fonctionnement, générer les signaux pour la commande du premier commutateur (41) et du deuxième commutateur (42) selon une deuxième boucle de régulation, qui diffère de la première boucle de régulation.

3. Circuit de fonctionnement selon la revendication 2,
dans lequel le convertisseur à résonance LLC (11) synchronisé est conçu pour recevoir une tension de bus et
dans lequel le dispositif de commande de commutateurs (20) est conçu pour, dans le deuxième mode de fonctionnement, générer les signaux pour la commande du premier commutateur (41) et du deuxième commutateur (42) en fonction de la tension de bus.

4. Circuit de fonctionnement selon l'une quelconque des revendications précédentes,
dans lequel le dispositif de commande de commutateurs (20) comprend un circuit intégré à semi-conducteur (28), qui est conçu pour la régulation de courant.

5. Circuit de fonctionnement selon la revendication 4,
dans lequel le dispositif de commande de commutateurs (20) comprend un autre circuit intégré à semi-conducteur (27), qui est couplé au circuit intégré à semi-conducteur (28), pour modifier sélectivement un potentiel au niveau d'au moins un raccord du circuit intégré à semi-conducteur (27) lorsque la régulation de tension doit être effectuée.

6. Convertisseur pour DEL, comprenant
le circuit de fonctionnement selon l'une quelconque des revendications précédentes.

7. Système, comprenant
le convertisseur pour DEL (3) selon la revendication 6 et
une source d'éclairage (5) qui comprend au moins une diode électroluminescente (6) et qui est connectée à au moins une sortie du convertisseur pour DEL (3).

8. Système selon la revendication 7,
dans lequel le convertisseur pour DEL (3) est conçu pour déterminer, en fonction d'informations sur la source d'éclairage (5), le fait que la régulation de courant ou la régulation de tension est effectuée.

9. Procédé pour faire fonctionner un circuit de fonctionnement pour l'alimentation d'une source d'éclairage (5), qui comprend au moins une diode électroluminescente (6), le circuit de fonctionnement comprenant un convertisseur à résonance LLC (11) comprenant un circuit en demi-pont, qui présente un premier commutateur (41) et un deuxième commutateur (42),
le procédé comprenant :
la détermination du fait que le circuit de fonctionnement doit fonctionner comme une source de courant constant ou comme une source de tension constante et
la commande du premier commutateur (41) et du deuxième commutateur (42) en fonction du fait que le circuit de fonctionnement doit fonctionner comme une source de courant constant ou comme une source de tension constante,
le circuit de fonctionnement comprenant une interface (24 ; 26), qui est couplée au dispositif de commande de commutateurs (20) pour permettre la sélection entre le premier mode de fonctionnement et le deuxième mode de fonctionnement,
**caractérisé en ce que** l'interface (24 ; 26) est conçue comme un raccord pour la connexion à la source d'éclairage (5).

10. Procédé selon la revendication 9,
qui est exécuté au moyen d'un circuit de fonctionnement selon l'une quelconque des revendications 1 à 5.
